# EUROPÄISCHE PATENTANMELDUNG

(11) **EP 4 553 713 A1**
(43) Veröffentlichungstag der Anmeldung: **14.05.2025**
(21) Anmeldenummer: 23208406.1
(22) Anmeldetag: 07.11.2023
(51) Int. Cl.: G06N 3/088, G06N 20/00

(54) **VERFAHREN UND VORRICHTUNG ZUR VERVOLLSTÄNDIGUNG EINES DATENSATZES FÜR EIN MASCHINENLERNMODEL**

(71) Anmelder: Volkswagen Aktiengesellschaft, 38440 Wolfsburg (DE)
(72) Erfinder: Spiegelberg, Jakob, 38122 Braunschweig (DE)

(57) **Zusammenfassung**

Die vorliegende Erfindung betrifft ein Verfahren zur Vervollständigung eines Datensatzes für ein Maschinenlernmodell (ML). Hierbei wird durch einen zentralen Server (S) eine Nutzeranfrage zu einer semantischen Beschreibung von Daten erfasst (10) und an ein oder mehrere mit dem zentralen Server (S) vernetzte Geräte gesendet (11). Es wird eine komprimierte numerische Repräsentation (EV) von Daten, die von einem der vernetzten Geräte erfasst worden sind, empfangen (12). Basierend auf der empfangenen komprimierten numerischen Repräsentation werden semantische Label ermittelt (13). Es wird überprüft (14), ob in den so erhaltenen Labeln eine semantische Beschreibung gemäß der Nutzeranfrage vorliegt. Wenn die Überprüfung ergibt, dass die semantische Beschreibung gemäß der Nutzeranfrage vorliegt, wird eine Mitteilung an das vernetzte Gerät, von dem die komprimierte numerische Repräsentation empfangen worden ist, gesendet (15). Daraufhin werden die Daten, welche der komprimierten numerischen Repräsentation zugrunde gelegen haben, empfangen (16). Ein in einer Datenbank (DB) für das Maschinenlernmodell abgelegter Datensatz wird um die empfangenen Daten ergänzt (17). Die Erfindung betrifft weiterhin ein entsprechendes durch ein Fahrzeug ausgeführtes Verfahren.

## Beschreibung

Die vorliegende Erfindung betrifft ein Verfahren und eine Vorrichtung zur Vervollständigung eines Datensatzes für ein Maschinenlernmodell, bei dem durch einen zentralen Server gezielt Daten mit bestimmten semantischen Inhalten angefordert werden können.

Beim Maschinellen Lernen (ML) wird mittels geeigneter selbstadaptiver Algorithmen und basierend auf Trainingsdaten ein statistisches Modell aufgebaut, mit dem Muster und Gesetzmäßigkeiten erkannt werden können und Vorhersagen für zukünftige Daten oder Entscheidungen basierend auf erfassten Daten getroffen werden können. Aufgrund der Komplexität sind Maschinenlern-Modelle üblicherweise als künstliche neuronale Netzwerke, beispielsweise im Bereich der Objektdetektion als sogenannte "Deep Neural Networks" ausgestaltet, und werden aus diesem Grund häufig auch als Systeme mit künstlicher Intelligenz (KI) bezeichnet. Solche tiefen neuronalen Netze können eine Vielzahl von Zwischenschichten (englisch hidden layers) zwischen Eingabeschicht und Ausgabeschicht und dadurch eine umfangreiche Komplexität mit einer sehr großen Zahl von Parametern und Rechenoperationen aufweisen und benötigen in der Lernphase eine große Menge an Trainingsdaten.

Ein Anwendungsgebiet des Maschinellen Lernens, dem immer mehr Bedeutung zukommt, ist der Einsatz in Fahrzeugen, beispielsweise für Fahrerassistenzsysteme beim teilautomatisierten Fahren oder für Sicherheitssysteme beim vollautomatisierten Fahren. So kann mit Fahrzeugsensoren das Umfeld des Fahrzeugs erfasst werden und basierend auf den erfassten Sensordaten mit einem geeigneten Maschinenlern-Modell ein Umfeldmodell erstellt werden. Hierfür können Wahrnehmungsmodule vorgesehen sein, welche erlernte Objekte im Umfeld erkennen können und Informationen hierüber an ein Planungsmodul weiterleiten. Auf diese Weise kann beispielsweise die Detektion und Klassifizierung diverser Objekte in mit Fahrzeugkameras erfassten Kamerabildern, wie beispielsweise von Fahrzeugen und Fußgängern, mit lernbasierten Verfahren realisiert werden. Das Planungsmodul kann dann für eine Trajektorienplanung und sichere Steuerung des Fahrzeugs die erkannten Objekte berücksichtigen. Sowohl das Wahrnehmungsmodule als auch das Planungsmodul können hierbei auf einem Maschinenlern-Modell basieren.

Eine Herausforderung bei der Entwicklung und dem Testen von solchen Systemen für Fahrerassistenzsysteme und autonom fahrende Fahrzeuge, aber auch für viele weitere Anwendungen des maschinellen Lernens, ist die Sicherstellung der Generalisierbarkeit der Performanz, welche im Training beobachtet wurde. Hierzu ist es notwendig, verschiedene semantische Domänen zu testen. So kann es beispielsweise im Rahmen einer semantischen Segmentierung von Bild- bzw. Videodaten erforderlich sein, die Korrektheit der Segmentierung für verschiedene Umweltbedingungen wie beispielsweise unterschiedliche Wetter- oder Lichtverhältnisse zu testen. Während des Trainings ist es dabei hilfreich, sicherzustellen, eine balancierte Auswahl solcher semantischen Domänen in die Trainingsdaten zu integrieren. Hierfür ist es notwendig, semantische Informationen aus den verwendeten Daten herauszulesen, um die Trainingsdatensätze entsprechend anzupassen.

Üblicherweise werden jedoch die hierfür erforderlichen semantischen Informationen nicht mitgelabelt, bzw. existieren nur begrenzt in internen Simulationsdatensätzen. Semantische Informationen können daher nicht genutzt werden, sodass dem Tester ohne manuelle Analyse nicht bekannt ist, in welchen semantischen Domänen eine getestete KI-Funktion noch nicht zufriedenstellend funktioniert.

Es sind zwar auch sogenannte Corner-Case-Detektoren bekannt, mit denen unerwartete und möglicherweise gefährliche Situationen widerspiegelnde Datenpunkte erfasst werden können. Wird ein Corner Case Detektor genutzt, so kann dieser zwar Datenpunkte für einen KI-Algorithmus auffinden, bei denen eine hohe Unsicherheit vorliegt, eine verwendete Metrik anormale Werte annimmt oder die Datendichte des Trainingsdatensatz tief ist. Eine Interpretation, warum diese Datenpunkte problematisch sind und wie ggf. eine Anpassung des Trainingsdatensatzes erfolgen sollte, ermöglichen diese jedoch nicht.

Ein System zur Charakterisierung des Fahrerverhaltens wird in der US 11,590,982 B1 offenbart. Ein System umfasst einen Prozessor und eine Schnittstelle, wobei die Schnittstelle einen Satz von Fahrzeugdaten empfängt, der eingebettete Bildvektoren enthält, die Fahrzeugdaten über eine kurze Zeitskala charakterisieren. Der Prozessor bestimmt unter Verwendung eines Modells für eine lange Zeitskala eine Kennzeichnung für eine lange Zeitskala, die zumindest teilweise auf den eingebetteten Bildvektoren basiert.

Die DE 10 2021 005 084 A1 beschreibt ein Verfahren zur Identifizierung von Kartenattributen und Kartenbeziehungen von Objekten in mittels eines Sensors erfassten Umgebungsinformationen eines Egofahrzeugs. Es werden dynamische Informationen, statische Informationen, umfassend geo-räumliche Entfernungen zwischen Objekten, semantische Informationen sowie Beziehungs-Informationen in einem Graph dargestellt. Hierbei werden über ein Graph-Neural-Network Kartenattribute und Kartenbeziehungen aus dem Graph gelernt, wobei zum Training des Graph-Neural-Networks eine Karte, in der zu lernende Kartenattribute und Kartenbeziehungen manuell gelabelt wurden, oder automatisiert generierte geometrische Informationen verwendet wird/werden.

Es ist eine Aufgabe der Erfindung, ein Verfahren zur Vervollständigung eines Datensatzes für ein Maschinenlernmodell zur Verfügung zu stellen, sowie eine entsprechende Vorrichtung bereitzustellen

Diese Aufgabe wird durch die unabhängigen Ansprüche gelöst. Bevorzugte Ausgestaltungen der Erfindung sind Gegenstand der abhängigen Ansprüche.

Das erfindungsgemäße Verfahren zur Vervollständigung eines Datensatzes für ein Maschinenlernmodell umfasst die folgenden durch einen zentralen Server ausgeführten Schritte:
- Erfassen einer Nutzeranfrage zu einer semantischen Beschreibung von Daten;
- Senden der Nutzeranfrage an ein oder mehrere mit dem zentralen Server vernetzte Geräte;
- Empfangen einer komprimierten numerischen Repräsentation von Daten, die von einem der vernetzten Geräte erfasst worden sind;
- Ermitteln semantischer Label basierend auf der empfangenen komprimierten numerischen Repräsentation;
- Überprüfen, ob in den so erhaltenen Labeln eine semantische Beschreibung gemäß der Nutzeranfrage vorliegt;
- Senden einer Mitteilung an das vernetzte Gerät, von dem die komprimierte numerische Repräsentation empfangen worden ist, wenn die Überprüfung ergibt, dass die semantische Beschreibung gemäß der Nutzeranfrage vorliegt;
- Empfangen der Daten, welche der komprimierten numerischen Repräsentation zugrunde gelegen haben; und
- Ergänzen eines in einer Datenbank für das Maschinenlernmodell abgelegten Datensatzes um die empfangenen Daten.

Auf diese Weise ermöglicht es das erfindungsgemäße Verfahren, sicherzustellen, dass auch Daten in bisher ungesehenen bzw. nicht vorausgesehenen semantischen Domänen aufgefunden werden können. Im Folgenden werden diese Daten auch als Datenpunkte bezeichnet, wobei hierunter allgemein eine Einheit von Informationen verstanden wird, beispielsweise die mit einem Sensor zu einem Zeitpunkt erfassten Sensordaten.

In dem nicht sämtliche von den vernetzten Geräten erfassten Daten direkt an den zentralen Server, im Folgenden auch als Backendserver oder kurz Backend bezeichnet, geschickt werden, sondern zunächst nur eine komprimierte numerische Repräsentation dieser Daten übermittelt wird, wird der Datenverkehr zwischen den vernetzten Geräten und dem Backend sowie der erforderliche Speicherbedarf bei dem Backend minimiert. Ferner ist auch keine aufwändige Klassifizierung der erfassten Daten in den vernetzten Geräten erforderlich, da durch das Backend ermittelt wird, welche der dezentral vorliegenden Daten verwendet werden sollen, so dass in den vernetzten Geräten keine hohen Rechenkapazitäten erforderlich sind bzw. in Anspruch genommen werden müssen.

Vorteilhafterweise werden hierbei für den Fall, dass die Überprüfung ergibt, dass die semantische Beschreibung gemäß der Nutzeranfrage vorliegt, die ermittelten semantischen Label an die Datenbank gesendet.

Besonders vorteilhaft kann das erfindungsgemäße Verfahren eingesetzt werden, wenn die vernetzten Geräte Fahrzeuge einer Fahrzeugflotte umfassen. So können vernetzte Fahrzeuge, welche an einen Flottendatensammler angeschlossen sind, beispielsweise für Straßenverhältnisse und Verkehrssituationen, die in den bisher vorhandenen Datensätzen für das Maschinenlernmodell unterrepräsentiert sind, zur Vervollständigung der Datensätze beitragen. Das Verfahren ist hierbei nicht auf Fahrzeuge eines Fahrzeugtyps bzw. einer Fahrzeugart beschränkt. Vielmehr können Daten, die von Fahrzeugen beliebiger Fahrzeugtypen bzw. Fahrzeugarten erfasst werden, zur Vervollständigung der Datensätze verwendet werden.

Vorteilhafterweise ist die komprimierte numerische Repräsentation der erfassten Daten als Zahlenvektor, der mittels eines Embedding-Algorithmus generiert wird, ausgestaltet. Im Folgenden wird der mit einem Embedding-Algorithmus generierte Zahlenvektor auch als Embedding-Vektor bezeichnet.

Ebenso wird vorteilhafterweise in dem Fahrzeug und dem zentralen Server der gleiche Embedding-Algorithmus verwendet.

Gemäß einer Ausführungsform der Erfindung werden durch den zentralen Server basierend auf einem Offline-Datensatz die Daten repräsentierende Zahlenvektoren berechnet werden, welche in Cluster aggregiert werden und wobei Label-Vektoren der Cluster generiert werden.

Vorteilhafterweise wird dabei von dem Fahrzeug ein die erfassten Daten repräsentierender Zahlenvektor empfangen, wobei basierend auf den Vektordistanzen zwischen dem empfangenen Zahlenvektor und den Label-Vektoren der Cluster mögliche semantische Label ermittelt werden.

Weiterhin wird dabei vorzugsweise für jeden Cluster basierend auf offline zur Verfügung stehenden Testdaten ein aus mehreren Labeln bestehender Label-Vektor ermittelt, wobei die Label so nach ihrem Abstand zum Cluster-Center gewichtet werden, dass höhere Abstände geringer gewichtet werden.

Dabei wird vorteilhafterweise für den empfangenen Zahlenvektor der jeweilige Abstand zu den Centren der einzelnen Cluster ermittelt und ein Labelvektor für die erfassten Daten aus den mit dem jeweiligen Abstand gewichteten Labelvektoren der einzelnen Cluster ermittelt.

Insbesondere enthält hierbei der Labelvektor für die erfassten Daten einen Satz von möglichen semantischen Labeln mit einer jeweils zugeordneten Vorkommensfrequenz.

Vorteilhafterweise werden von dem Satz möglicher semantischer Label nur diejenigen Label für die Überprüfung auf eine Übereinstimmung mit der Nutzeranfrage berücksichtigt, für welche die jeweils zugeordnete Vorkommensfrequenz über einem nutzerdefinierten Schwellwert liegt.

In einer Ausführungsform der Erfindung umfasst der zu vervollständigende Datensatz insbesondere Bilddaten zur Verkehrsinfrastruktur, wobei die erfassten Daten Kamerabilder von einem oder mehreren mit dem zentralen Server vernetzten Fahrzeugen umfassen.

In einer weiteren Ausführungsform wird die Nutzeranfrage zu der semantischen Beschreibung von Daten in Textform erfasst.

Die Erfindung umfasst ebenso ein Verfahren zur Vervollständigung eines Datensatzes für ein Maschinenlernmodell, bei dem durch ein Fahrzeug die folgenden Schritte ausgeführt werden:
- Empfangen einer Nutzeranfrage zu einer semantischen Beschreibung von Daten von einem zentralen Server;
- Erfassen und Zwischenspeichern von Daten;
- Ermitteln einer komprimierten numerischen Repräsentation von Daten, die von einem der vernetzten Geräte erfasst worden sind;
- Senden der komprimierten numerischen Repräsentation an einen zentralen Server;
- Überprüfen, ob eine Rückmeldung von dem zentralen Server empfangen wurde;
- Senden der Daten, welche der komprimierten numerischen Repräsentation zugrunde gelegen haben; wenn die Überprüfung ergibt, dass eine Rückmeldung empfangen wurde; und
- Löschen der zwischengespeicherten Daten.

Ferner umfasst die Erfindung eine Vorrichtung, die eingerichtet ist, ein erfindungsgemäßes Verfahren auszuführen sowie ein Computerprogramm mit Instruktionen, die bei Ausführung durch einen Computer den Computer zur Ausführung der Schritte des erfindungsgemäßen Verfahrens veranlassen.

Schließlich umfasst die Erfindung auch ein Fahrzeug, das eingerichtet ist, ein erfindungsgemäßes Verfahren auszuführen oder eine erfindungsgemäße Vorrichtung aufweist.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm für ein in einem zentralen Server ausgeführtes erfindungsgemäßes Verfahren;
- Fig. 2: zeigt schematisch ein Ablaufdiagramm für ein in einem Fahrzeug ausgeführtes erfindungsgemäßes Verfahren; und
- Fig. 3: zeigt eine schematische Übersicht mit einem zentralen Server, der für das Vervollständigen eines Datensatzes für ein Maschinenlernmodell mit einem exemplarisch dargestellten Fahrzeug einer Fahrzeugflotte Daten austauscht.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

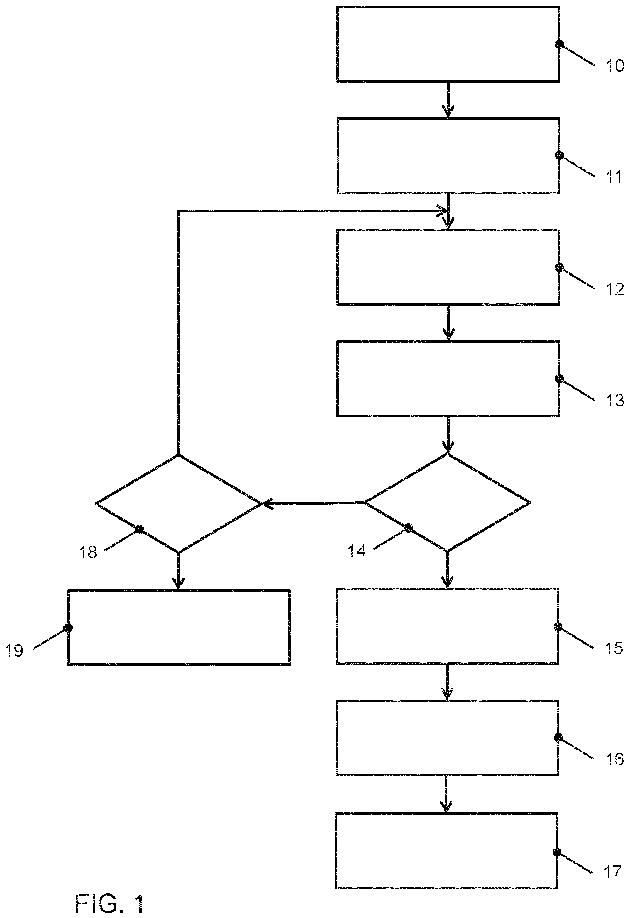

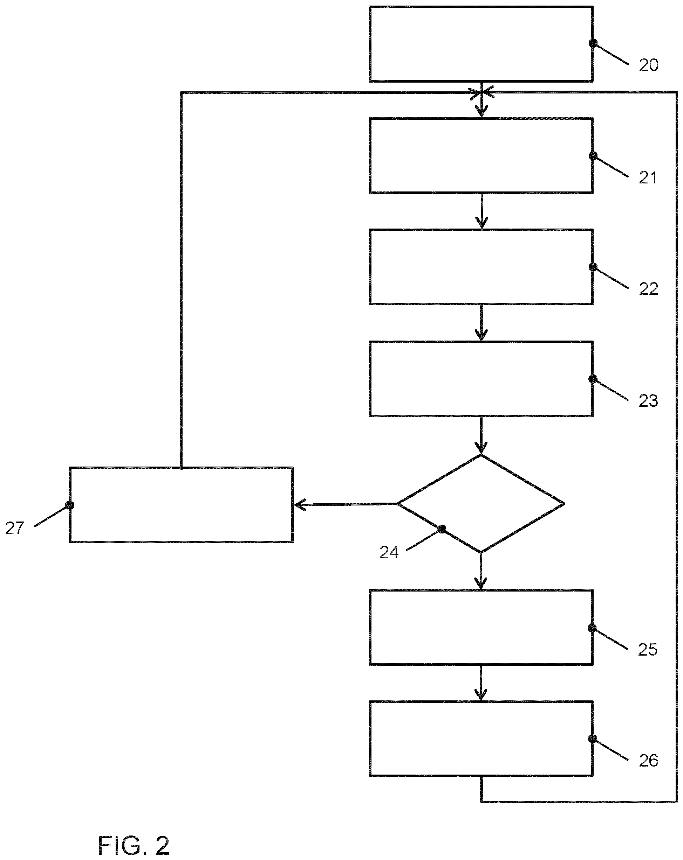

Die vorliegende Erfindung umfasst sowohl ein durch einen zentralen Server ausgeführtes Verfahren, das im Folgenden anhand von Figur 1 erläutert wird, als auch ein entsprechendes durch vernetzte Geräte, insbesondere vernetzte Fahrzeuge, ausgeführtes Verfahren, das anhand von Figur 2 erläutert wird.

Ein Ablaufdiagramm eines durch einen zentralen Server ausgeführten Verfahrens wird in Figur 1 gezeigt. Das Verfahren wird am Beispiel eines zentralen Servers erläutert, der mit Fahrzeugen einer Fahrzeugflotte in Verbindung steht, ist aber nicht hierauf beschränkt. Der zentrale Server kann beispielsweise von einem Fahrzeughersteller für die Vervollständigung von Datensätzen für KI-Systeme, die in Fahrzeugen dieses Fahrzeugherstellers eingesetzt werden sollen, betrieben werden.

In einem Verfahrensschritt 10 empfängt der zentrale Server von einem Nutzer eine Anfrage zu einer semantischen Information. Beispielhaft bezieht sich diese Anfrage im Folgenden auf eine semantische Beschreibung von Bild- bzw. Videodaten, ist aber nicht auf diesen Datentyp beschränkt. Ebenso können auch andere Datentypen berücksichtigt werden, wie Daten von LIDAR-Punktwolken oder andere im Fahrzeug vorliegende Daten, wie beispielsweise zwischen Steuergeräten der jeweiligen Fahrzeuge über einen CAN-Bus ausgetauschte Daten.

Die Anfrage kann von dem Nutzer insbesondere in Textform vorliegen und beispielsweise durch Eingabe über eine Tastatur oder eine Spracheingabe erfolgen. Ein Beispiel für solch eine Anfrage wäre "verschneite Landstraßen", um während des Testens von einer Kl-Funktion eines Assistenzsystems zu überprüfen, ob etwa eine semantische Segmentierung von Bild- bzw. Videodaten für eine Objekterkennung basierend auf der vorliegenden Datensätzen auch im Fall verschneiter Landstraßen verlässlich funktioniert oder aber aufgrund einer mangelnden Datenbasis Probleme bereitet.

Von dem Nutzer können hierbei auch komplexere Anfragen gestellt werden, bei denen verschiedene Parameter kombiniert werden, wie beispielsweise zusätzlich eine Einschränkung auf bestimmte Tages- oder Nachtzeiten, das Vorhandensein von entgegenkommendem Verkehr in den erfassten Bild- bzw. Videodaten, eine Blendung durch den entgegenkommenden Verkehr, etc.

Zusätzlich kann auch ein von dem Nutzer gesetzter Schwellwert erfasst werden. Durch einen solchen nutzerdefinierten Schwellwert ergibt sich die Möglichkeit für den Nutzer, die Zahl der falsch positiven Werte (false positives) und der falsch negativen Werte (false negatives) bei der Labelerstellung gemäß seinen Vorstellungen individuell anzupassen.

Ferner kann der Nutzer auch spezifizieren, welche Datentypen berücksichtigt werden sollen, beispielsweise, ob die Anfrage Bild- oder Videodaten betreffen soll.

Die erfasste Nutzeranfrage wird in einem Verfahrensschritt 11 von dem zentralen Server an ein oder mehrere mit dem zentralen Server vernetzte Fahrzeuge gesendet, beispielsweise über eine Mobilfunkverbindung. Der zentrale Server kann hierbei bestimmte Fahrzeuge einer Fahrzeugflotte basierend auf den vordefinierten Kriterien auswählen, beispielsweise solche Fahrzeuge, welche geeignete Sensoren für die Erfassung der gewünschten Daten aufweisen.

In einem Verfahrensschritt 12 empfängt der zentrale Server dann von einem oder mehreren Fahrzeugen für die von diesen Fahrzeugen erfassten und dort zwischengespeicherten Daten eine komprimierte numerische Repräsentation. Diese komprimierte numerische Repräsentation kann insbesondere als sogenannter Embedding-Vektor mit Zahleneinträgen in den einzelnen Vektorkomponenten ausgestaltet sein. Die kompletten Datensätze werden dagegen von den Fahrzeugen nicht an den zentralen Server übertragen, sodass die zu übertragende Datenmenge geringgehalten werden kann.

In einem Verfahrensschritt 13 werden dann basierend auf dem empfangenen Embedding-Vektor semantische Label ermittelt. Hierfür wird der Embedding-Vektor von einem Clustering-Modul des zentralen Servers verarbeitet, welches bereits vor Erfassen der Nutzeranfrage vorbereitet worden ist.

Die Vorbereitung des Clustering-Moduls kann hierbei wie folgt durchgeführt werden. Zunächst werden von einem Offline-Datensatz, der insbesondere eine Vielzahl von Beispielbildern enthalten kann, mit einem Embedding-Algorithmus sogenannte Embeddings berechnet worden, wobei serverseitig der gleiche Embedding-Algorithmus zum Einsatz kommt, der auch in den Fahrzeugen eingesetzt wird. Dann werden die so berechneten Embeddings mittels einem unüberwachten Clustering-Algorithmus in Cluster aggregiert. Für jeden Bild-Cluster werden einige der offline zur Verfügung stehenden Bilder dann zusammen mit einer Text-Anfrage, die semantischen Inhalte des jeweiligen Bildes allgemein zu beschreiben, wie beispielsweise "beschreibe den Inhalt dieses Bildes", einem KI-System zugeführt.

Dieses KI-System kann sowohl offene als auch gezielte Fragen zu dem Inhalt eines Bildes beantworten. Hierfür wird ein sogenannten Visual Language Model verwendet, welches darauf ausgelegt ist, visuelle Inhalte wie Bilder und Videos zu verarbeiten und zu verstehen, um aussagekräftige Erkenntnisse und Informationen zu gewinnen. Im Kern handelt es sich hierbei um einen Deep-Learning-Algorithmus zur Analyse und Interpretation visueller Daten. Dieses Netzwerk wird auf großen Datensätzen von Bildern und anderen visuellen Medien trainiert, so dass es lernen kann, verschiedene visuelle Elemente wie Objekte, Personen und Szenen zu erkennen und zu klassifizieren. Eines der wichtigsten Merkmale eines Visual Language Models ist hierbei die Fähigkeit, textuelle Beschreibungen visueller Inhalte zu erzeugen. Hierfür kombiniert das Visual Language Model üblicherweise sein Verständnis des visuellen Inhalts mit einem Sprachmodell, das auf Textdaten trainiert wurde. Dadurch kann das Modell lernen, bestimmte visuelle Elemente mit entsprechenden Textbeschreibungen zu verknüpfen.

Das KI-System generiert dann zu jedem Bild einen Labelvektor, der mehrere Label aufweisen kann. Solche Label können semantische Beschreibungen von Bildinhalten wie beispielsweise "Landstraße", "Dämmerung", "verschneite Umgebung", "entgegenkommender Verkehr", "Blendung" enthalten. Aus einer Linearkombination der Labelvektoren einzelner Bilder ergibt sich dann ein Label-Vektor des Clusters. Bei der Bestimmung der Linearkombination der Labelvektoren werden diese hierbei nach ihrem Abstand zum Cluster-Center gewichtet, so das größere Abstände ein geringeres Gewicht erhalten und die Summe aller Abstände auf den Wert 1 normiert ist. Auf diese Weise ist gewährleistet, dass die gewichtete Vorkommensfrequenz später als Indikator für die Auswahl bestimmer Label benutzt werden kann.

Zur Ermittlung der semantischen Label basierend auf dem empfangenen Embedding-Vektor werden dann durch eine Gewichtung mit dem Abstand zu den einzelnen Cluster-Centren die Labelvektoren dieser Cluster-Centren zu einem Labelvektor für den durch den Embedding-Vektor repräsentierten Datenpunkt zusammengezogen. So wird ein Satz von möglichen semantischen Labeln erhalten, die jeweils eine Vorkommensfrequenz zwischen 0 und 1 haben. Schließlich können dann durch den vorher festgelegten nutzerdefinierten Schwellwert die Label ausgewählt werden, die über dem Schwellwert liegt.

In Verfahrensschritt 14 wird dann überprüft, ob in den so erhaltenen Labeln eine von dem Nutzer gewünschte semantische Information vorliegt. Wenn dieses der Fall ist, wird in Verfahrensschritt 15 eine entsprechende Rückmeldung an das Fahrzeug, von welchem der Embedding-Vektor empfangen worden ist, übermittelt. Ferner können die erhaltenen Label zu diesem Zeitpunkt einer Datenbank, in der die zu vervollständigen Datensätze für das Maschinenlernen abgelegt sind, zugeführt werden

Im darauffolgenden Verfahrensschritt 16 wird dann von dem Fahrzeug der zwischengespeicherte Datenpunkt empfangen und in Verfahrensschritte 17 zur Ergänzung des Ansatzes in der Datenbank abgelegt.

Ergibt die Überprüfung in Verfahrensschritte 14 dagegen, dass eine gewünschte semantische Information nicht in den ermittelten Labeln enthalten ist, kann zur Minimierung des Datenverkehrs davon abgesehen werden, eine Rückmeldung an das Fahrzeug zu senden.

In diesem Fall wird in Verfahrensschritt 18 überprüft, ob ein Kriterium für den Abbruch des Verfahrens erfüllt ist. Diese Überprüfung kann in Abhängigkeit von verschiedenen Kriterien erfolgen. So kann beispielsweise das Auswerten von empfangenen Embedding-Vektoren bzw. das Warten auf den Empfang solcher im Embedding-Vektoren nach einer bestimmten Zeitdauer beendet werden. Ebenso kann das Verfahren aber auch beendet werden, wenn eine vordefinierte Maximalzahl von Bildern erreicht ist. Solange das Abbruchkriterium nicht erfüllt ist, wird dann das serverseitige Verfahren fortgesetzt und dann bei Erfüllen des Abbruchkriteriums in Verfahrensschritt 19 beendet.

Zusätzlich kann es in einer vorteilhaften Ausführungsform vorgesehen werden, für den Fall, dass die Überprüfung in Verfahrensschritte 14 ergibt, dass eine gewünschte semantische Information nicht in den ermittelten Labeln enthalten ist, die Anfrage semantischer Informationen flexibel anzupassen.

Ebenso kann es vorgesehen werden, in dem Clustering-Modul die Ermittlung der Label-Vektoren der Cluster zu wiederholen und die allgemeine Anfrage, das Bild semantisch zu beschreiben, durch eine gezielte Frage nach der gewünschten Information zu ersetzen. So kann beispielsweise in dem oben genannten Beispiel statt "beschreibe den Inhalt dieses Bildes" gezielt "ist dies ein Bild einer verschneiten Landstraße" angefragt werden. Dabei können dem KI-System auch mehrere gezielte Anfragen zugeführt werden, um komplexere Label zu erhalten. Da der Raum der Embeddings und die enthaltenen Cluster sich nicht ändern, kann das System unverändert weiterverwendet werden.

Figur 2 zeigt schematisch ein Ablaufdiagramm für ein entsprechendes Verfahren, das in einem der an der Vervollständigung des Maschinenlern-Datensatzes beteiligten Fahrzeuge ausgeführt wird.

Hierbei wird zunächst in einem Verfahrensschritt 20 durch das Fahrzeug eine Nutzeranfrage zu einer semantischen Beschreibung von Daten empfangen, die von dem zentralen Server in dem Verfahrensschritt 11 an die beteiligten Fahrzeuge gesendet worden ist.

In dem darauffolgenden Verfahrensschritt 21 werden dann von dem Fahrzeug Daten gesammelt. Hierbei kann es sich insbesondere um mit mindestens einem Fahrzeugsensor erfasste Daten handeln. Dieses können insbesondere Bild- oder Videodaten des Fahrzeugumfelds sein, die von einer oder mehreren Außenkameras des Fahrzeugs erfasst werden. Stattdessen oder zusätzlich kann das Fahrzeugumfeld aber auch mit anderen Sensoren erfasst werden, zum Beispiel mit einem Radarsensor, einem LIDAR-Sensor oder einem Ultraschallsensor. Ebenso kann es sich aber auch um andere im Fahrzeug vorliegende Daten handeln.

Die gesammelten Daten werden dabei lokal im Fahrzeug zwischengespeichert, beispielsweise in einem zentralen Datenspeicher, eine Übermittlung der lokalen Daten an den zentralen Server oder andere Fahrzeuge erfolgt dagegen nicht.

In dem darauffolgenden Verfahrensschritt 22 wird dann eine komprimierte numerische Repräsentation der erfassten Daten, insbesondere in Form von Embedding-Vektoren, ermittelt. Die Berechnung der Embedding-Vektoren erfolgt hierbei mit dem gleichen Embedding-Algorithmus, der auch bei dem zentralen Server zum Einsatz kommt.

Die Embedding-Vektoren werden dann in Verfahrensschritt 23 an den zentralen Server gesendet. Hierbei kann ggfs. vor der Übermittlung noch eine zusätzliche Anonymisierung vorgenommen werden, um beispielsweise die Privatsphäre der Halter der beteiligten Fahrzeuge besser zu schützen.

In Verfahrensschritt 24 wird dann überprüft, ob von dem zentralen Server eine Rückmeldung erhalten wurde. Wenn dieses der Fall ist, wird in Verfahrensschritt 25 der gewünschten Datenpunkts an den zentralen Server gesendet. Um den gewünschten Datenpunkt eindeutig identifizieren zu können, kann die Rückmeldung von dem zentralen Server eine Information enthalten, für welchen Embedding-Vektor bzw. welche Embedding-Vektoren die vollständigen Daten angefordert werden.

Im darauffolgenden Verfahrensschritt 25 wird dann von dem Fahrzeug der zwischengespeicherte Datenpunkt an den zentralen Server gesendet und in Verfahrensschritte 26 in dem Zwischenspeicher des Fahrzeugs gelöscht. Ebenso wird der Datenpunkt in Verfahrensschritte 26 in dem Zwischenspeicher des Fahrzeugs gelöscht, falls die gewünschte semantische Information nicht vorhanden ist und das Fahrzeug daher von dem zentralen Speicher nicht benachrichtigt wird. Hierfür kann insbesondere vorgesehen sein, den Zwischenspeicher nach einer definierten Wartezeit zu leeren. Auf diese Weise werden die Speicherressourcen des Fahrzeugs nicht unnötig belastet. Ferner wird so ein möglicherweise später erfolgender unberechtigter Zugriff auf die Daten durch Dritte vermieden. Ebenso kann der Zwischenspeicher gelöscht werden, wenn die Fahrt des Fahrzeugs beendet ist und das Fahrzeug keine Daten mehr erfasst.

Das in den Fahrzeugen ausgeführte erfindungsgemäße Verfahren kann beispielsweise als Computerprogramm auf einem Steuergerät ausgeführt werden. Dazu wird das Computerprogramm in einen Speicher des jeweiligen Steuergeräts übertragen und abgespeichert. Das Computerprogramm umfasst Instruktionen, die das Steuergerät bei Ausführung durch einen Prozessor des Steuergeräts veranlassen, die Schritte gemäß dem erfindungsgemäßen Verfahren auszuführen. Der Prozessor kann eine oder mehrere Prozessoreinheiten umfassen, beispielsweise Mikroprozessoren, digitale Signalprozessoren oder Kombinationen daraus.

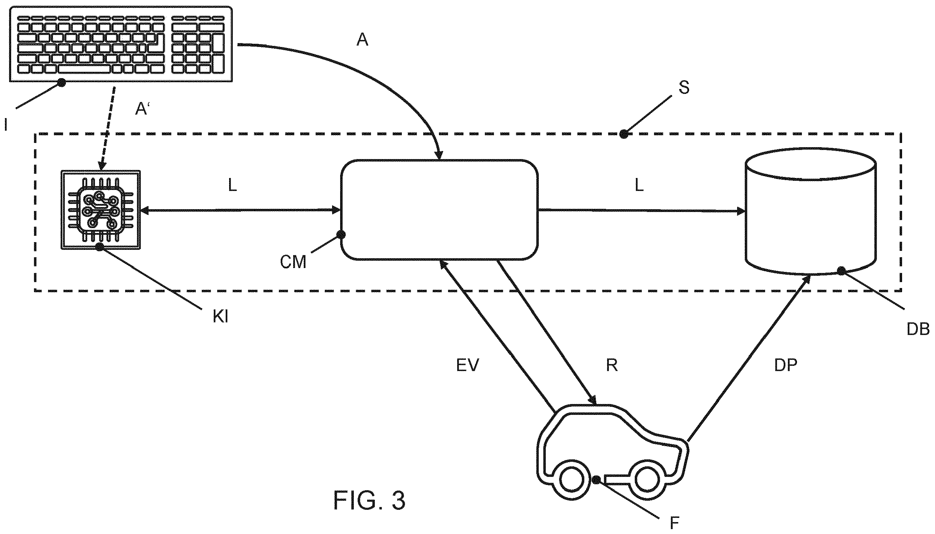

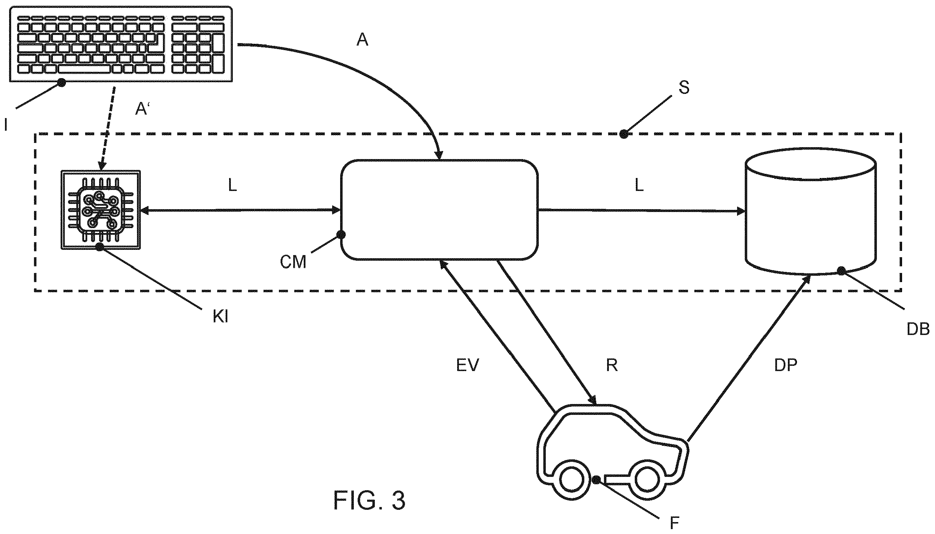

Figur 3 zeigt schematisch eine Übersicht mit einem zentralen Server S, der für das Vervollständigen eines Datensatzes für ein Maschinenlernmodell mit einem exemplarisch dargestellten Fahrzeug F einer Fahrzeugflotte Daten austauscht. Der zentrale Server kann als Backend-Server beispielsweise von einem Fahrzeughersteller betrieben werden und Teil einer hier nicht weiter beschriebenen IT-Infrastruktur sein. Das Fahrzeug F weist hierbei verschiedene Komponenten auf, die der Übersichtlichkeit halber in der Figur nicht dargestellt sind. So sind in dem Fahrzeug insbesondere Sensoren, wie beispielsweise Kameras, ein Datenspeicher zum Zwischenspeichern der mit den Sensoren erfassten Daten und ein Kl-Modul zur Berechnung des Embeddings zu den erfassten Daten vorgesehen. Das KI-Modul kann beispielsweise auf einem zentralen Steuergerät des Fahrzeugs umgesetzt werden, welches hierfür ausreichende Rechenkapazitäten aufweist.

Das KI-Modul kann hierbei eigens für diesen Zweck in dem Fahrzeug implementiert sein. Alternativ kann ein bereits ohnehin für anderer Zwecke im Fahrzeug vorhandenes KI-Modul verwendet werden, um aus dem neuronalen Netz des KI-Moduls an geeigneter Stelle eine latente Darstellung des Datenpunkts auszulesen und hieraus das Embedding abzuleiten. Diese Variante hat den Vorteil, dass so der Rechenaufwand im Fahrzeug möglichst gering gehalten wird. Ferner weist das Fahrzeug eine Kommunikationseinheit für die drahtlose Kommunikation mit dem Server S auf.

Der zentrale Server weist ein Clustering-Modul CM auf, welches wie oben beschrieben Label L einzelner Cluster-Centren zu einem neuen Datenpunkt zuweist. In Verbindung mit dem Clustering-Modul CM steht ein KI-System Kl, welches mittels eines Visual Language Model sowohl offene als auch gezielte Fragen zu dem Inhalt eines Bildes beantworten kann. Das KI-System KI ermöglicht insbesondere offene semantische Beschreibungen zu Bild-Clustern, die von dem Clustering-Modul CM gebildet worden sind, und erstellt aus den Nutzeranfragen gezielt Label L, die dem Clustering-Modul CM zugeführt werden.

Ferner ist eine Datenbank DB vorgesehen, in welcher insbesondere mit Labeln versehene Datensätze für Maschinenlern-Anwendungen abgelegt sind. Die Datenbank DB ist hier als Teil des zentralen Servers dargestellt, kann aber ebenso an anderer Stelle verortet sein, solange ein Datenaustausch mit dem Clustering-Modul CM und den Fahrzeugen F möglich ist. Ebenso gilt dieses für die symbolisch in Form einer Computertastatur dargestellte Eingabeeinheit I. Die Eingabeeinheit kann hierbei in beliebiger Form ausgestaltet sein, solange diese eine Erfassung von Anfrage in Textform ermöglicht.

Mittels der Eingabeeinheit I kann der Nutzer, wie oben beschrieben, eine allgemeine semantische Anfrage A eingeben und hierzu einen Schwellwert setzen. Ebenso kann der Nutzer über diese Eingabeeinheit optional eine oder mehrere gezielte semantische Anfragen A` für gezielte Label stellen.

Von dem exemplarisch dargestellten Fahrzeug F werden Daten, beispielsweise Bilddaten mittels einer Außenkamera, detektiert und zwischengespeichert. Für diese erfassten Daten wird, wie oben beschrieben, ein Embedding-Vektor EV errechnet und an das Clustering-Modul CM geschickt, welches dem Embedding entsprechende Label L ermittelt und diese daraufhin überprüft, ob die gewünschte Information enthalten ist. Falls dieses der Fall ist, wird das Label L an die Datenbank DB übermittelt und eine entsprechende Rückmeldung R an das Fahrzeug F gesendet. Das Fahrzeug F sendet daraufhin dann die Daten des dem Label entsprechenden Datenpunkts DP an die Datenbank DB.

### Bezugszeichenliste

- 10 - 19: Verfahrensschritte des zentralen Servers
- 20 - 27: Verfahrensschritte der Fahrzeugvorrichtung
- S: Server
- I: Eingabeeinheit
- KI: KI-System
- CL: Clustering Modul
- DB: Datenbank
- F: Fahrzeug
- A: Allgemeine semantische Anfrage
- A': Gezielte semantische Anfrage
- L: Label
- EV: Embedding-Vektor
- R: Rückmeldung
- DP: Datenpunkt

## Patentansprüche

1. Verfahren zur Vervollständigung eines Datensatzes für ein Maschinenlernmodell (ML), bei dem durch einen zentralen Server (S) die folgenden Schritte ausgeführt werden:
- Erfassen (10) einer Nutzeranfrage zu einer semantischen Beschreibung von Daten;
- Senden (11) der Nutzeranfrage an ein oder mehrere mit dem zentralen Server (S) vernetzte Geräte;
- Empfangen (12) einer komprimierten numerischen Repräsentation (EV) von Daten, die von einem der vernetzten Geräte erfasst worden sind;
- Ermitteln (13) semantischer Label basierend auf der empfangenen komprimierten numerischen Repräsentation;
- Überprüfen (14), ob in den so erhaltenen Labeln eine semantische Beschreibung gemäß der Nutzeranfrage vorliegt;
- Senden (15) einer Mitteilung an das vernetzte Gerät, von dem die komprimierte numerische Repräsentation empfangen worden ist, wenn die Überprüfung ergibt, dass die semantische Beschreibung gemäß der Nutzeranfrage vorliegt;
- Empfangen (16) der Daten, welche der komprimierten numerischen Repräsentation zugrunde gelegen haben; und
- Ergänzen (17) eines in einer Datenbank (DB) für das Maschinenlernmodell abgelegten Datensatzes um die empfangenen Daten.

2. Verfahren nach Anspruch 1, wobei für den Fall, dass die Überprüfung ergibt, dass die semantische Beschreibung gemäß der Nutzeranfrage vorliegt, die ermittelten semantischen Label an die Datenbank gesendet (15) werden.

3. Verfahren nach Anspruch 1 oder 2, wobei die vernetzten Geräte insbesondere Fahrzeuge (F) einer Fahrzeugflotte umfassen.

4. Verfahren nach Anspruch 1 oder 2, wobei die komprimierte numerische Repräsentation (EV) der erfassten Daten als Zahlenvektor ausgestaltet ist, der mittels eines Embedding-Algorithmus generiert wird.

5. Verfahren nach Anspruch 4, wobei in dem Fahrzeug (F) und dem zentralen Server (S) der gleiche Embedding-Algorithmus verwendet wird.

6. Verfahren nach Anspruch 4 oder 5, wobei durch den zentralen Server (S) basierend auf einem Offline-Datensatz die Daten repräsentierende Zahlenvektoren berechnet werden, welche in Cluster aggregiert werden und wobei Label-Vektoren der Cluster generiert werden.

7. Verfahren nach Anspruch 6, wobei von dem Fahrzeug (F) ein die erfassten Daten repräsentierender Zahlenvektor empfangen wird und basierend auf den Vektordistanzen zwischen dem empfangenen Zahlenvektor und den Label-Vektoren der Cluster mögliche semantische Label ermittelt werden.

8. Verfahren nach Anspruch 6 oder 7, wobei für jeden Cluster basierend auf offline zur Verfügung stehenden Testdaten ein aus mehreren Labeln bestehender Label-Vektor ermittelt wird, wobei die Label so nach ihrem Abstand zum Cluster-Center gewichtet werden, dass höhere Abstände geringer gewichtet werden.

9. Verfahren nach einem der Ansprüche 6 bis 8, wobei für den empfangenen Zahlenvektor der jeweilige Abstand zu den Centren der einzelnen Cluster ermittelt wird und ein Labelvektor für die erfassten Daten aus den mit dem jeweiligen Abstand gewichteten Labelvektoren der einzelnen Cluster ermittelt wird.

10. Verfahren nach Anspruch 9, wobei der Labelvektor für die erfassten Daten einen Satz von möglichen semantischen Labeln mit einer jeweils zugeordneten Vorkommensfrequenz enthält.

11. Verfahren nach Anspruch 10, wobei von dem Satz möglicher semantischer Label nur diejenigen Label für die Überprüfung auf eine Übereinstimmung mit der Nutzeranfrage berücksichtigt werden, für welche die jeweils zugeordnete Vorkommensfrequenz über einem nutzerdefinierten Schwellwert liegt.

12. Verfahren nach einem der Ansprüche 2 bis 11, wobei der zu vervollständigende Datensatz insbesondere Bilddaten zur Verkehrsinfrastruktur umfasst und die erfassten Daten Kamerabilder von einem oder mehreren mit dem zentralen Server (S) vernetzten Fahrzeugen (F) umfassen.

13. Verfahren nach einem der vorhergehenden Ansprüche, wobei die Nutzeranfrage zu der semantischen Beschreibung von Daten in Textform erfasst wird.

14. Verfahren zur Vervollständigung eines Datensatzes für ein Maschinenlernmodell (ML), bei dem durch ein Fahrzeug (F) die folgenden Schritte ausgeführt werden:
- Empfangen (20) einer Nutzeranfrage zu einer semantischen Beschreibung von Daten von einem zentralen Server (S);
- Erfassen und Zwischenspeichern (21) von Daten;
- Ermitteln (22) einer komprimierten numerischen Repräsentation (EV) von Daten, die von einem der vernetzten Geräte erfasst worden sind;
- Senden (23) der komprimierten numerischen Repräsentation (EV) an einen zentralen Server (S);
- Überprüfen (24), ob eine Rückmeldung von dem zentralen Server (S) empfangen wurde;
- Senden (25) der Daten, welche der komprimierten numerischen Repräsentation zugrunde gelegen haben; wenn die Überprüfung ergibt, dass eine Rückmeldung empfangen wurde; und
- Löschen (26, 27) der zwischengespeicherten Daten.

15. Vorrichtung, die eingerichtet ist, ein Verfahren gemäß einem der Ansprüche 1 bis 14 auszuführen.
